(19) Europäisches Patentamt

European Patent Office

Office européen des brevets

(11) Publication number: **0 138 524**
**B1**

(12) **EUROPEAN PATENT SPECIFICATION**

(45) Date of publication of patent specification: **26.04.89**

(21) Application number: **84306791.9**

(22) Date of filing: **05.10.84**

(51) Int. Cl.⁴: **C 08 L 27/12,** C 08 L 27/18, H 01 B 3/44

(54) Melt-shapable fluoropolymer compositions.

(30) Priority: **07.10.83 US 539871**

(43) Date of publication of application:
**24.04.85 Bulletin 85/17**

(45) Publication of the grant of the patent:
**26.04.89 Bulletin 89/17**

(84) Designated Contracting States:
**AT BE CH DE FR GB IT LI NL SE**

(56) References cited:
**DE-A-1 947 556**
**DE-B-2 939 754**
**GB-A-1 354 471**
**US-A-3 291 864**

(73) Proprietor: **RAYCHEM CORPORATION (a Delaware corporation)**
**300 Constitution Drive**
**Menlo Park, California 94025 (US)**

(72) Inventor: **Lunk, Hans Edmund**
**1145 Monte Rosa Drive**
**Menlo Park California 94025 (US)**
Inventor: **Reed, Donald Allen**
**465 7th Avenue**
**Menlo Park California 94025 (US)**

(74) Representative: **Jay, Anthony William et al**
**Raychem Limited Intellectual Property Law Department Faraday Road**
**Dorcan Swindon Wiltshire (GB)**

# EP 0 138 524 B1

**Description**

This invention relates to polymeric compositions comprising fluoropolymers.

Fluoropolymers are well known and are useful in a broad range of applications. Some fluoropolymers can be melt-shaped, including for example polyvinylidene fluoride and copolymers of tetrafluoroethylene and ethylene, hexafluoropropylene, or a perfluorinated vinyl ether. These fluoropolymers have been used extensively for electrical insulation, particularly as melt-extruded jackets around conductors, and exhibit a valuable combination of physical and electrical properties. However, other fluoropolymers, in particular polytetrafluoroethylene (PTFE), which have very high crystallinity, also have such high molecular weights that they cannot be melt-shaped. This makes them difficult and expensive to process, and has severely restricted their use, despite the fact that in some respects they offer important advantages over the melt-shapeable fluoropolymers in particular one or more of good elongation, high melting point and low loss tangent at high frequencies. Attempts have been made to produce similar polymers which retain these advantages but have relatively low molecular weights so that they can be melt-extruded. However, such polymers have such poor mechanical properties that they are of little practical value. For example, PTFE can be irradiated to produce a material which retains the crystallinity of the original polymer but has a relatively low molecular weight, but melt extrusion of this material results in products which are extremely brittle. Irradiation of PTFE is described in British Patent Specification 1354471.

We have now discovered a way of utilizing many of the excellent properties of highly crystalline fluoropolymers in compositions which can be melt-shaped. In particular, we have found that it is possible to obtain melt-shapeable compositions by mixing two fluoropolymers, the first having a crystallinity of less than 45% and being melt-shapeable in the absence of other polymers (e.g. a copolymer of tetrafluoroethylene and hexafluoropropylene or a perfluorinated vinyl ether), and the second fluoropolymer having a crystallinity of at least 50% (e.g. irradiated PTFE); and that products obtained by melt-shaping such compositions have a valuable combination of properties derived from both fluoropolymers. Thus, the shaped products have tensile and elongation values which are at least adequate for many purposes, coupled with other valuable properties such as elevated melting point and low loss tangent.

In one aspect, the present invention provides a composition which can be melt-shaped and which comprises a mixture of a first fluoropolymer which has a crystallinity of less than 45% and which can be melt-shaped in the absence of other polymers, and a second crystalline fluoropolymer which has a crystallinity of at least 50%, the second fluoropolymer being the product of irradiating a fluoropolymer which, prior to irradiation, could not be melt-extruded in the absence of other polymers.

In another aspect, the invention provides a shaped article prepared by melt-shaping a composition as defined above.

The term "fluoropolymer" is used herein to denote a polymer which contains at least 10%, preferably at least 25%, by weight of fluorine, or a mixture of two or more such polymers. The term "perfluoropolymer" is used herein to denote a fluoropolymer in which all the substituents on the polymer backbone are fluorine atoms, or perfluoroalkyl or perfluoroalkoxy groups; the polymer backbone can consist of carbon atoms or can also contain hetero atoms, e.g. oxygen.

Melt viscosities given in this specification are measured at 380°C at a shear rate of 100 $sec^{-1}$. Crystallinities given in this specification are measured using a differential scanning calorimeter (DSC).

The first fluoropolymer is preferably a crystalline fluoropolymer, particularly a perfluoropolymer, which can be melt-shaped in the absence of other polymers. Thus the first fluoropolymer will generally have a melt viscosity at 380°C of less than $10^5$ Pa.s ($10^6$ poise), preferably less than $10^4$ Pa.s ($10^5$ poise), particularly less than $5 \times 10^3$ Pa.s ($5 \times 10^4$ poise). The lower the melt viscosity, the easier the composition is to process, but (in general) the less desirable the properties of the final product. Accordingly, the melt viscosity of the first fluoropolymer is generally at least $10^2$ Pa.s ($10^3$ poise), preferably at least $5 \times 10^2$ Pa.s ($5 \times 10^3$ poise), particularly at least $1 \times 10^3$ Pa.s ($1 \times 10^4$ poise), especially at least $2 \times 10^3$ Pa.s ($2 \times 10^4$ poise). The first fluoropolymer is generally a homopolymer or copolymer of one or more fluorine containing olefinically unsaturated monomers, or a copolymer of one or more fluorine-containing olefinically unsaturated monomers and one or more olefins. The first fluoropolymer has a melting point of at least 150°C, often at least 250°C, e.g. up to 350°C, the melting point being defined as the temperature above which no crystallinity exists in the polymer (or when a mixture of crystalline polymers is used, in the major crystalline component in the mixture). Particularly preferred first fluoropolymers are copolymers of tetrafluoroethylene with one or more perfluorinated monomers, e.g. hexafluoropropylene or a perfluorinated vinyl ether; such copolymers are preferably perfluoropolymers but can contain small proportions of units derived from monomers which are only partially substituted by fluorine or which are free from fluorine. Commercially available fluoropolymers of this type include those sold by E.I. du Pont de Nemours under the trade names PEP—100, FEP—160 and PFA. Other polymers which can be used as the first fluoropolymers include copolymers of ethylene and tetrafluoroethylene and optionally one or more other comonomers (known as ETFE polymers), e.g. a copolymer comprising 35 to 60 mole percent of ethylene, 35 to 60 mole percent of tetrafluoroethylene and up to 10 mole percent of one or more other comonomers; copolymers of ethylene and chlorotrifluoroethylene; polyvinylidene fluoride; and copolymers of vinylidene fluoride with one or both of hexafluoropropylene and tetrafluoroethylene, or with hexafluoroisobutylene.

2

EP 0 138 524 B1

The first fluoropolymer has a crystallinity of less than 45%, preferably less than 30%, especially less than 20%. On the other hand, its crystallinity is preferably at least 5%, particularly at least 10%.

The second fluoropolymer is an irradiated crystalline fluoropolymer, preferably a perfluoropolymer, which has a crystallinity which is at least 50%, preferably at least 60%, especially at least 65%. The melt viscosity at (380°C) of the second fluoropolymer is generally less than $10^5$ Pa.s ($10^6$ poise), preferably less than $10^4$ Pa.s ($10^5$ poise), especially less than $2 \times 10^3$ Pa.s ($2 \times 10^4$ poise). In many cases its melt viscosity (at 380°C) is at least 1 (10), particularly at least 10 (100), especially at least 100 (1000) Pa.s (poise).

The invention is of particular value when the second fluoropolymer has been obtained by irradiating (e.g. with an electron beam) a fluoropolymer which, prior to irradiation, had a melt viscosity at least 3 times, preferably at least 10 times, particularly at least 100 times, that of the first fluoropolymer (the difference can be very much larger, e.g. by a factor of the order of $10^5$ or more). The second fluoropolymer is one which, prior to irradiation, could not be melt-processed in the absence of other polymers under practical conditions, because the invention makes it possible to utilize at least some of the valuable properties of such polymers while yet retaining the enormous advantages of melt-processing. Preferred second fluoropolymers are polymers of tetrafluoroethylene, in particular polytetrafluoroethylene (PTFE), for example that commercially available under the trade name Teflon from E. I. du Pont de Nemours. Surprisingly, the presence of the irradiated polymer does not have a substantial adverse effect on the processing characteristics of the first polymer, and can indeed substantially improve those characteristics. Thus the novel compositions have a melt viscosity which is preferably less than 2 times, particularly less than 1 time, especially less than 0.5 time, the melt viscosity of the first fluoropolymer. The irradiation will generally be carried out in the substantial absence of any radiation cross-linking agent, so that the predominant effect of the radiation is to degrade the fluoropolymer to a lower molecular weight, more brittle material. The radiation dose is preferably 2.5 to 40 Mrad, particularly 5 to 30 Mrad. $10^4$Gy. The second fluoropolymer can be in the form of granules or any other form when it is irradiated.

The relative amounts of the first and second fluoropolymers can vary widely, depending primarily on the desired final product. Thus the ratio by weight of the first to the second fluoropolymer can be from 0.05:1 to 20:1. For many end uses, the preferred ratio is 0.3:1 to 2.5:1, particularly 0.3:1 to 1:1, e.g. 0.4:1 to 0.6:1. The polymers can be blended in any convenient way, for example by physical blending of the polymers in the form of granules.

The compositions can contain, in addition to the first and second fluoropolymers, other ingredients which do not obviate the advantages provided by the fluoropolymers. Thus the compositions can contain non-polymeric ingredients, for example antioxidants, processing aids, acid acceptors, fire retardants and fillers (reinforcing or non-reinforcing), and/or relatively small quantities of other polymers. When the composition is to be foamed, it can also contain a foaming agent and/or nuclearing agent.

The composition can be melt-shaped in any convenient way, including molding and melt-extrusion, which is generally preferred, especially when the composition is used to provide insulation on an elongate electrical conductor. The composition can provide the sole insulation over an electrical component, or it can provide one of two or more insulating jackets. The composition can be foamed as part of the shaping operation, and this is particularly desirable when it is important that the insulation should have low loss at high frequencies, for example the insulation in a coaxial cable transmitting high frequency electromagnetic energy.

Examples

The invention is illustrated by the following Examples, which are summarized in the Table below. Examples 1—5 are comparative Examples. The various ingredients given in the Table are further identified below.

FEP—160 is a high molecular weight copolymer of tetrafluoroethylene and hexafluoropropylene, available from du Pont.

PFA—350 is a high molecular weight copolymer of tetrafluoroethylene and a perfluorovinyl ether, also available from du Pont.

PTFE is high molecular weight polytetrafluoroethylene available under the trade name Teflon from du Pont.

PTFE (10 MR) is PTFE which has been irradiated to a dose of 10 Megarads.

PTFE (20 MR) is PTFE which has been irradiated to a dose of 20 Megarads.

PTFE (30 MR) is PTFE which has been irradiated to a dose of 30 Megarads.

The tensile strengths and elongations reported in the Table were measured by pulling a cylindrical rod in an Instron Tensile Testing Machine using an elongation rate of 5.08 cm (2 inches)/minute. The irradiated PTFE's were too brittle for their tensile strengths and elongations to be measured.

The crystallinities reported in the Table are calculated from measured heats of fusion, using a value of 92.9J (22.2 calories)/gram for 100% crystalline polymer.

The viscosities reported in the Table are measured (as discussed above) at 380°C at a shear rate of 100 sec$^{-1}$ in a Rheometrics viscometer.

The Loss Tangents reported in the Table are measured at a frequency of 10 GHz.

The blends were prepared by dry-mixing the components, followed by melt blending in a counterrotating twin-screw extruder. Cylindrical rods for tensile testing were melt-shaped from the blends (or from the individual polymers) by extrusion through a cylindrical die at 380°C.

3

TABLE

| | Viscosity Pa.s (poise) | Loss Tangent ($\times 10^4$) | Tensile MPa (psi) | Elongation % | Tm (°C) °C | Crystallinity % |
|---|---|---|---|---|---|---|
| 1. FEP-160 | $3.7 \times 10^3$ ($3.7 \times 10^4$) | 6.5 | 20.7 (3000) | 300 | 268 | 11 |
| 2. PFA-350 | $5.0 \times 10^3$ ($5.0 \times 10^4$) | 11.0 | 27.6 (4000) | 300 | 310 | 20 |
| 3. PTFE (10 MR) | $2.3 \times 10^3$ ($2.3 \times 10^4$) | – | 0 | 0 | 338 | 65 |
| 4. PTFE (20 MR) | $3.1 \times 10^2$ ($3.1 \times 10^3$) | – | ·0 | 0 | 339 | 67 |
| 5. PTFE (30 MR) | $1.4 \times 10^2$ ($1.4 \times 10^3$) | – | 0 | 0 | 333 | 67 |
| 6. 50% PTFE (10 MR) 50% FEP-160 | $3.6 \times 10^3$ ($3.6 \times 10^4$) | 6.2 | 13.7 (1990) | 45 | 330 | 29 |
| 7. 50% PTFE (20 MR) 50% FEP-160 | $2.6 \times 10^3$ ($2.6 \times 10^4$) | 6.2 | 15.5 (2250) | 125 | 329 | 27 |
| 8. 50% PTFE (30 MR) 50% FEP-160 | $2.3 \times 10^3$ ($2.3 \times 10^4$) | 7.5 | 14.5 (2098) | 225 | 329 | 27 |
| 9. 66% PTFE (30 MR) 34% FEP-160 | $8.7 \times 10^2$ ($8.7 \times 10^3$) | 5.9 | 13.7 (1994) | 92 | 325 | 45 |
| 10. 40% PTFE (30 MR) 60% PFA-350 | $2.5 \times 10^3$ ($2.5 \times 10^4$) | – | 21.4 (3100) | 370 | 322 | 30 |

EP 0 138 524 B1

**EP 0 138 524 B1**

**Claims**

1. A composition which can be melt-shaped and which comprises a mixture of
(1) a first fluoropolymer which has a crystallinity of less than 45% and which can be melt-shaped in the absence of other polymers, and
(2) a second crystalline fluoropolymer which has a crystallinity of at least 50%, the second fluoropolymer being the product of irradiating a fluoropolymer which, prior to irradiation, could not be melt-extruded in the absence of other polymers.

2. A composition according to claim 1, wherein the first fluoropolymer has a melt viscosity at 380°C of at least $5 \times 10^3$ Pa.s ($5 \times 10^4$ poise) and less than $10^5$ Pa.s ($10^6$ poise).

3. A composition according to claim 2 wherein the first polymer has a melt viscosity at 380°C of at least $10^3$ Pa.s ($10^4$ poise) and less than $10^4$ Pa.s ($10^5$ poise).

4. A composition according to any one of the preceding claims, wherein the second fluoropolymer has a melt visocosity of 380°C of less than $10^5$ Pa.s ($10^6$ poise).

5. A composition according to claim 4, wherein the second fluoropolymer has a melt viscosity at 380°C less than $10^4$ Pa.s ($10^5$ poise).

6. A composition according to any of the preceding claims, wherein the ratio by weight of the first fluoropolymer to the second fluoropolymer is within the range from 0.3:1 to 2.5:1.

7. A composition according to claim 6, wherein the said ratio is within the range from 0.3:1 to 1:1.

8. A composition according to any of the preceding claims wherein the first fluoropolymer has a crystallinity of at least 5% and less than 30%.

9. A composition according to claim 8 wherein the first fluoropolymer has a crystallinity of less than 20%.

10. A composition according to any of the preceding claims, wherein the second fluoropolymer has a crystallinity of more than 60%.

11. A composition according to claim 10, wherein the second copolymer has a crystallinity of more than 65%.

12. A composition according to any of the preceding claims wherein the second fluoropolymer is a polymer obtained by irradiating a fluoropolymer whose melt viscosity at 380°C, prior to irradiation, was at least three times the melt viscosity at 380°C of the first fluoropolymer.

13. A composition according to any of the preceding claims wherein the second fluoropolymer is polytetrafluoroethylene which has been irradiated to a dosage of 2.5 to 40, preferably 5 to 30 Mrad. ($.10^4$ Gy).

14. A composition according to claim 13 wherein the first fluoropolymer is a copolymer of tetrafluoroethylene and at least one other perfluorinated comonomer.

15. A composition according to claim 13 wherein the first fluoropolymer is a copolymer of tetrafluoroethylene and hexafluoropropylene.

16. A composition according to claim 13 wherein the first fluoropolymer is a copolymer of tetrafluoroethylene and perfluorinated vinyl ether.

17. A shaped article which is composed of a melt-shaped composition according to any of the preceding claims.

18. An article according to claim 17 in the form of foamed insulation in a coaxial cable.

**Patentansprüche**

1. Zusammensetzung, die sich aus der Schemlze formen läßt und die eine Mischung aus folgendem aufweist:
(1) einem ersten Fluoropolymer, das einen Kristallisationsgrad von weniger als 45% hat und das in der Abwesenheit von anderen Polymeren aus der Schmelze geformt werden kann, und
(2) einem zweiten kristallinen Fluoropolymer, das einen Kristallisationsgrad von mindestens 50% hat, wobei das zweite Fluoropolymer das Produkt der Bestrahlung eines Fluoropolymers ist, welches vor der Bestrahlung in Abwesenheit von anderen Polymeren nicht schmelzextrudiert werden konnte.

2. Zusammensetzung nach Anspruch 1, wobei das erste Fluoropolymer eine Schmelzviskosität bei 380°C von mindestens $5 \times 10^3$ Pa·s ($5 \times 10^4$ Poise) und weniger als $10^5$ Pa·s ($10^6$ Poise) hat.

3. Zusammensetzung nach Anspruch 2, wobei das erste Polymer eine Schmelzviskosität bei 380°C von mindestens $10^3$ Pa·s ($10^4$ Poise) und weniger als $10^4$ Pa·s ($10^5$ Poise) hat.

4. Zusammensetzung nach einem der vorherigen Ansprüche, wobei das zweite Fluoropolymer eine Schmelzviskosität bei 380°C von weniger als $10^5$ Pa·s ($10^6$ Poise) hat.

5. Zusammensetzung nach Anspruch 4, wobei das zweite Fluoropolymer eine Schmelzviskosität bei 380°C von weniger als $10^4$ Pa·s ($10^5$ Poise) hat.

6. Zusammensetzung nach einem der vorherigen Ansprüche, wobei das Gewichtsverhältnis des ersten Fluoropolymers zum zweiten Fluropolymer in dem Bereich von 0,3:1 bis 2,5:1 liegt.

7. Zusammensetzung nach Anspruch 6, wobei das Verhältnis in dem Bereich von 0,3:1 bis 1:1 liegt.

8. Zusammensetzung nach einem der vorherigen Ansprüche, wobei das erste Fluoropolymer einen Kristallisationsgrad von mindestens 5% und weniger als 30% hat.

5

EP 0 138 524 B1

9. Zusammensetzung nach Anspruch 8, wobei das erste Fluoropolymer einen Kristallisationsgrad von weniger als 20% hat.

10. Zusammensetzung nach einem der vorherigen Ansprüche, wobei das zweite Fluoropolymer einen Kristallisationsgrad von mehr als 60% hat.

11. Zusammensetzung nach Anspruch 10, wobei das zweite Copolymer einen Kristallisationsgrad von mehr als 65% hat.

12. Zusammensetzung nach einem der vorherigen Ansprüche, wobei das zweite Fluoropolymer ein Polymer ist, das erhalten ist durch Bestrahlung eines Fluoropolymers, dessen Schmelzviskosität bei 380°C, vor der Bestrahlung, zumindest das Dreifache der Schmelzviskosität bei 380°C des ersten Fluoropolymers betrug.

13. Zusammensetzung nach einem der vorherigen Ansprüche, wobei das zweite Fluoropolymer Polytetrafluoroethylen ist, das mit einer Dosis von 2,5 bis 40, vorzugsweise von 5 bis 30 Mrad ($\cdot 10^4$ Gy) bestrahlt worden ist.

14. Zusammensetzung nach Anspruch 13, wobei das erste Fluoropolymer ein Copolymer von Tetrafluorethylen und mindestens ein anderes perfluoriertes Comonomer ist.

15. Zusammensetzung nach Anspruch 13, wobei das erste Fluoropolymer ein Copolymer von Tetrafluorethylen und Hexafluoropropylen ist.

16. Zusammensetzung nach Anspruch 13, wobei das erste Fluoropolymer ein Copolymer von Tetrafluorethylen und perfluoriertem Vinylether ist.

17. Geformter Gegenstand, der aus einer aus der Schmelze geformten Zusammensetzung nach einem der vorherigen Ansprüche zusammengesetzt ist.

18. Gegenstand nach Anspruch 17 in Form einer geschäumten Isolierung in einem Koaxialkabel.

## Revendications

1. Une composition qui peut être travaillée à l'état fondu et qui comprend un mélange de
(1) un premier fluoropolymére qui a une cristallinité de moins de 45%, et qui peut être travaillé l'état fondu en l'absence d'autres polyméres, et
(2) un second fluoropolymére cristallin qui a une cristallinité d'au moins 50%, le second fluoropolymére étant le produit d'irradiation d'un fluoropolymére qui, avant irradiation, ne pouvait être extrudé à l'état fondu en l'absence d'autres polyméres.

2. Une composition selon la revendication 1 où le premier fluoropolymére a une viscosité à l'état fondu à 380°C d'au moins $5.10^3$ Pa.s ($5.10^4$ poises) et moins de $10^5$ Pa.s ($10^5$ poises).

3. Une composition selon la revendication 2 où le premier polymére a une viscosité à l'état fondu à 380°C d'au moins $10^3$ Pa.s ($10^4$ poises) et moins de $10^4$ Pa.s ($10^5$ poises).

4. Une composition selon l'une quelconque des revendications précédentes, où le second fluoropolymére a une viscosité à l'état fondu à 380°C inférieure à $10^5$ Pa.s ($10^6$ poises).

5. Une composition selon la revendication 4, où le second fluoropolymére a une viscosité à l'état fondu à 380°C inférieure à $10^4$ Pa.s ($10^5$ poises).

6. Une composition selon l'une quelconque des revendications précédentes, où le rapport pondéral du premier au second fluoropolymère se situe dans l'intervalle 0,3:1 à 2,5:1.

7. Une composition selon la revendication 6, où ledit rapport se situe entre 0,3:1 et 1:1.

8. Une composition selon l'une quelconque des revendications précédentes où le premier fluoropolymére a une cristallinité d'au moins 5% et de moins de 30%.

9. Une composition selon la revendication 8 où le premier fluoropolymére a une cristallinité de moins de 20%.

10. Une composition selon l'une quelconque des revendications précédentes, où le second fluoropolymére a une cristallinité de plus de 60%.

11. Une composition selon la revendication 10, où le second fluoropolymére a une cristallinité de plus de 65%.

12. Une composition selon l'une quelconque des revendications précédentes, où le second fluoropolymére est un polymére obtenu par irradiation d'un fluoropolymére dont la viscosité à l'état fondu à 380°C, avant irradiation, était d'au moins trois fois la viscosité à l'état fondu à 380°C du premier fluoropolymére.

13. Une composition selon l'une quelconque des revendications précédentes, où le second fluoropolymére est du polytétrafluoroéthyléne qui a été irradié à une dose de 2,5 à 40, de préférence 5 à 30 Mrad ($.10^4$ Gy).

14. Une composition selon la revendication 13 où la premier fluoropolymére est un copolymére de tétrafluoroéthyléne et d'au moins un autre comonomére perfluoré.

15. Une composition selon la revendication 13 où le premier fluoropolymére est un copolymére de tétrafluoroéthyléne et d'hexafluoropropyléne.

16. Une composition selon la revendication 13 où le premier fluoropolymére est un copolymére de tétrafluoroéthyléne et d'éther vinylique perfluoré.

6

17. Un article façonné qui est formé d'une composition travaillée l'état fondu selon l'une quelconque des revendications précédentes.

18. Un article selon la revendication 17 ayant la forme d'un isolant expansé dans un câble coaxial.